(19) Europäisches Patentamt
European Patent Office
Office européen des brevets

(11) **EP 4 707 262 A1**

(12) **EUROPEAN PATENT APPLICATION**

(43) Date of publication:
**11.03.2026 Bulletin 2026/11**

(21) Application number: **25200490.8**

(22) Date of filing: **05.09.2025**

(51) International Patent Classification (IPC):
***C05F 11/02*** *(2006.01)*

(52) Cooperative Patent Classification (CPC):
**C05F 11/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.09.2024 US 202418825868**

(71) Applicant: **James, Joseph J.**
**Columbia South Carolina 29223 (US)**

(72) Inventor: **James, Joseph J.**
**Columbia South Carolina 29223 (US)**

(74) Representative: **Marks & Clerk LLP**
**15 Fetter Lane**
**London EC4A 1BW (GB)**

(54) **USING THE CRBBP PROCESS TO COST-EFFECTIVELY AND EFFICIENTLY CAPTURE CO2, IN CLIMATE-SMART BIOMASS, TO COMBAT CLIMATE CHANGE, THEN TO SEQUESTER THE CAPTURED CARBON IN VARIOUS CLIMATE-SMART BIO-PRODUCTS**

(57) Provided is climate-smart process that combines a use of photosynthesis with remediating air, soil and water and a production of bio-products in which captured carbon is sequestered. The process includes one or more bio-crops that are converted into a climate-smart biomass. The climate-smart biomass captures an average of 7 tons of $CO_2$/acre/year. During certain processes to make bio-products, the climate-smart biomass is heat treated between about 400° to about 500°C for between about 30 to about 180 minutes under non-oxygenated conditions and 15% of carbon in the climate-smart biomass is consumed, leaving at least about 85% of the carbon in the climate-smart biomass.

**FIG. 1A**

EP 4 707 262 A1

**Description**

**FIELD OF THE PRESENT DISCLOSURE**

The present disclosure is directed to climate-smart forms of biomass being created, in order to cost-effectively and efficiently capture $CO_2$, then being heat or otherwise treated, via the CRBBP Process and methods thereof. The present disclosure is additionally directed to methods of using climate-smart biomass to make climate-smart bio-products.

**BACKGROUND**

Global warming and the resulting existential threat of climate change has become a major global concern. As a result, there have been tireless efforts to develop methods and processes that focus on the reduction of greenhouse gases, such as $CO_2$, in order to mitigate climate change. One such process is the innovative application of the inventor's Combined Remediation Biomass and Bio-Product Production (CRBBP) Process. This process involves the planting of those fast and large-growing bio-crops, which capture extraordinary amounts of $CO_2$/Acre/Time Period and harvesting the resulting biomass for use in various applications. Furthermore, this process results in one of the least expensive and effective ways to capture $CO_2$ and sequester the captured Carbon. In addition, through this process, bio-crops can be planted to simultaneously remedy a variety of additional environmental problems, such as remediating industrial waste discharge, ground water contamination, agricultural runoff, destabilized soil, exposure to wind, deforestation, etc. The CRBBP Process is detailed in U.S. Patent No. 10,086,417 (the '417 patent).

**SUMMARY OF INVENTION**

The embodiments of the present disclosure describe applications of the CRBBP Process which result in the capture of approximately 7 tons of $CO_2$/Acre/Time Period, thus more effectively putting land and water to work mitigating climate change. The present disclosure also describes the following applications of the CRBBP Process:

**Underused Utility, Industrial, Governmental, Military Base and Indian Reservation Sites:** Plant Bio-crops to capture $CO_2$ and remediate sites, as required, then convert the resulting Biomass into Biochar and place in the same soils to sequester the captured Carbon or sequester it in other Bio-Products.

**Brownfield Sites Remediation:** Plant Bio-crops to capture $CO_2$, remediate old industrial and contaminated sites (Brownfields), as required, and then convert the resulting Biomass into Biochar and place in the same soils to sequester the captured Carbon, or sequester it in other Bio-Products.

**Mining Disturbed Sites Remediation, Repair and Reuse:** Plant Bio-crops to capture $CO_2$, remediate sites, as required, and then convert the resulting Biomass into Biochar and place in the same, or other soils to sequester the captured Carbon and enhance soil quality, or sequester it in other Bio-Products.

**Wind Farm Enhancement and $CO_2$ Capture:** For Land-Based Wind Farms, plant Bio-crops to capture $CO_2$, remediate land, as required, and to both shape and optimize the Wind Flow, to both enhance Wind Turbine and minimize the Wake Effect on downwind turbines to maximize Wind Farm performance and to capture $CO_2$, then convert the resulting Biomass into Biochar and place in same soils to sequester the captured Carbon. For Water-Based Wind Farms, a Plastic Enclosed Field, to do the same, in a water-situated environment will be used.

**Pop-Up Shade Amenity:** Arrange Bio-Crops in a 3-row deep, Semi-Circle and strategically position it to maximize shade in poor, treeless, urban neighborhoods, to protect residents from Climate Change's Heat Island Effect, then convert the resulting Biomass into Biochar and place in the same soils to sequester the captured Carbon.

**Floating Bio-Crop Farms (FBC's):** Floating Farms, in which Bio-Crops and/or Aquatic Plants will be suspended on the surface of a water body to capture $CO_2$, remediate water, as required, and then convert the resulting Biomass into Bio-Products, to sequester the captured Carbon. Fish, or other aquatic life, might be grown in the lower chamber of FBC's, among the Bio-Crop roots, and waterfowl might land in and reside in the remediated waters, along with fish or other aquatic life, of an FBC's Inner Ring.

**Catastrophic Forest Fire Abatement and $CO_2$ Capture:** Strategically separate portions of large Forests from each other with wide bands of Bio-Crops, strategically keeping prevailing winds and seasons in mind, to lessen the likelihood of and spread of catastrophic Forest Fires from occurring, and to capture approximately 4 times the $CO_2$/Acre as the Trees, to combat the very Climate Change which is increasing Forest Fire occurrences.

**Vertical Bio-Crop Farm (VBF's):** VBF's can be stationed near a large $CO_2$ Emitter, like a Utility, Industrial Operation, or large Emissions Collector, like the Holland and Lincoln Tunnels, in New York City, and rather than release the collected emissions directly into the atmosphere, a $CO_2$ extraction system, involving VBF's, first removes substantial amounts of $CO_2$ from the collected emissions.

**Wastewater Treatment Plant Spray Fields:** Plant Bio-crops to capture $CO_2$, clean up the partially cleaned wastewater, spray into such fields, where the ground often fails to appropriately clean the wastewater, then convert the resulting Biomass into Biochar and place in the same soils to sequester the captured Carbon, enhance future water cleaning, or sequester it in other Bio-Products.

**Highway Medians and Other Appropriate Highway-Related Sites:** Plant Bio-crops to capture $CO_2$, then convert the resulting Biomass into Biochar and place in same soils to sequester the captured Carbon or sequester it in other Bio-Products. Such plantings may also help to capture some of the various amounts of airborne particulate pollution, emitted by vehicles travelling along such highways.

**VBF Space Applications:** And, such VBF's also may play a role in space, in orbit, on the Moon, or on Mars, supporting manned Missions, by cost-effectively converting the $CO_2$ emitted by personnel and activity in a Mission Facility, in orbit, on the Moon, and/or in the case of Mars, also convert that planet's heavily $CO_2$-laden atmosphere into Oxygen, for Mission Personnel to breath, and Biomass and subsequently, Bio-Products, which will lessen the payloads required from Earth to support such Missions.

As mentioned above, one application of the CRBBP Process involves the capture of $CO_2$ from both land and water-based windfarms. The CRBBP Process cost-effectively remediates and/or stabilizes contaminated land and water by capturing $CO_2$, thus reducing the amount of $CO_2$ in the atmosphere, planting crops at sites that are contaminated, and using their roots to pull contaminants out of the ground. Air, soil, and water can also be remediated simultaneously or sequentially, and such multi-tasking can make each task, including $CO_2$ capture, even less expensive.

Regarding the land-based windfarms, bio-crops are planted to capture $CO_2$, remediate land, as required, and to both shape and optimize wind flow. The resulting biomass can then be converted into biochar and placed in the same soils to sequester the captured carbon. Other land types that benefit from this process include underused, utility, industrial, undeveloped, governmental, military base, Indian reservation, Brownfield (contaminated sites), and disturbed sites. For the disturbed sites, soil quality can be enhanced and used in the same, or other soils for repair and reuse.

Regarding the water-based wind farms, a Plastic Enclosed Field is used to both shape and optimize the wind flow, to enhance wind farm performance and to capture $CO_2$. As with the land-based windfarms, the resulting biomass is converted into Biochar or other bio-products.

In addition to water-based windfarms, bio-crops can be used in Floating Bio-Crop Farms (FBC's). In these farms, bio-crops and/or aquatic plants are suspended on the surface of a water body and grown to capture $CO_2$ and remediate water, as required. The resulting biomass is then converted into bio-products, to sequester the captured carbon.

Bio-crops can also be used in wastewater treatment plant spray fields to capture $CO_2$ and clean up partially cleaned wastewater that has been sprayed into these fields. The resulting biomass can then be converted into biochar which can be placed in the same fields to sequester the captured carbon, enhance future water cleaning, or to sequester it into other bio-products.

As it relates to the various applications mentioned above, the CRBBP Process is one of the most cost-effective ways of capturing $CO_2$/Acre/Time Period in both land and water. While not limited for use in underutilized lands, the CRBBP Process is an effective way to put such lands to work by capturing $CO_2$ and sequestering the captured carbon in the form of biochar in these lands.

Additional applications of the CRBBP Process involve use in Vertical Bio-Crop Farms (VBF's), on Earth and in Space, to Capture $CO_2$ and to enhance Earth and Space-based facility operations. For example, VBF's can be stationed near a large emitter, such as a utility, an industrial operation, or large emissions collectors like the Holland and Lincoln Tunnels in New York City. Rather than allowing the emissions that are being collected in these tunnels to go directly into the atmosphere, a screening and $CO_2$ extraction system including these VBF's can also remove substantial amounts of $CO_2$ from the collected emissions. Such VBF's also may play a role on Mars, or on the moon, to support manned missions by converting the $CO_2$ emitted by personnel active in a mission facility, or in the case of Mars, converting the planet's heavily $CO_2$-laden atmosphere into oxygen for the mission personnel to breathe.

In addition to $CO_2$ capture, the bio-crops themselves can benefit poor, treeless, urban neighborhoods by protecting residents of these areas from the Heat Island Effect caused by climate change. More specifically, bio-crops, in the form of Pop-Up Shade Amenities, are arranged in a 3-row deep semi-circle and strategically positioned to maximize the amount of new shade in these at-risk communities.

Furthermore, $CO_2$ capture and catastrophic forest fire spread can be mitigated by strategically separating portions of large forests from each other, using wide bands of bio-crops, which are harvested before the peak of forest fire season, to thereby decrease the likelihood of catastrophic forest fires from spreading. At the same time, approximately 4 times the $CO_2$ per acre can be captured, compared to the trees found in these forests, in order to combat the very climate change that is increasing forest fire severity.

A "climate-smart" application of the CRBBP Process has been developed in which very fast and large-growing bio-crops are planted in order to take advantage of photosynthesis, one of nature's oldest $CO_2$ capture processes. For the purposes of this present application, "climate-smart" in this context describes a plant or tree which captures an average of 7 tons $CO_2$/acre/year, or more, and that can capture at least 3 times as much $CO_2$ as an equal acreage of pine trees.

Such climate-smart bio-crops capture large amounts of atmospheric $CO_2$/Acre/Year, at one of the world's lowest costs ($35/Ton). The resulting biomass can then be processed via the CRBBP Process and converted into a variety of climate-smart bio-products, in which captured carbon can be sequestered for very long or varying periods of time. Thus, development of these climate-smart bio-products via the CRBBP Process provides one of the most enhanced and cost-effective ways of mitigating climate change due to their enhanced ability to capture $CO_2$.

One such climate-smart bio-crop of interest is biomass sorghum. This bio-crop is shown to capture approximately 20 tons of $CO_2$ per acre, per year, and to be a maximal $CO_2$ capture bio-crop, thus making it one of the most essential and cost-effective bio-crops for achieving climate change mitigation.

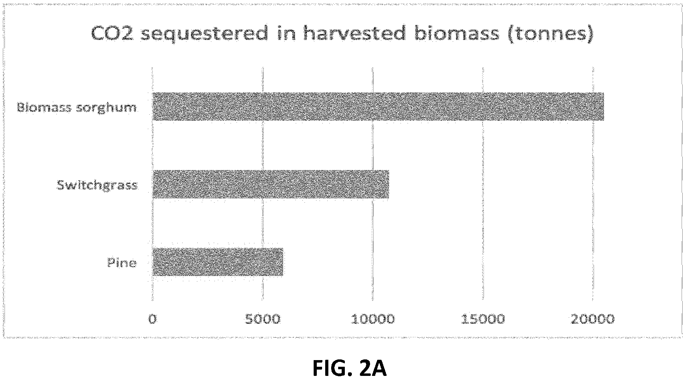

As disclosed in the '417 patent, biomass sorghum captures nearly 4 times as much $CO_2$ as trees, as shown in FIG. 2A based on studies performed by Dr. Daniel Sanchez of University of California-Berkeley on relative amounts of $CO_2$ captured over 15-year period from 100-acre plot of forage (biomass) sorghum, switchgrass, and pine. As shown in FIG. 2A, biomass sorghum captures about twice as much $CO_2$ per acre over a 15-year period compared to switchgrass and about four times as much $CO_2$ per acre compared to pine trees.

Climate-smart bio-crops, such as those that produce the biomass sorghum described in the Berkely studies, grow much faster and bigger, thereby capturing as much as 7 tons of $CO_2$/Acre/Time Period, compared to the "standard" bio-crops, which capture more standard amounts of $CO_2$/Acre/Time Period, as shown in FIG. 2A. As a result, biomass sorghum can be used in the present disclosure to produce heat-treated, climate-smart biomass filler powder products.

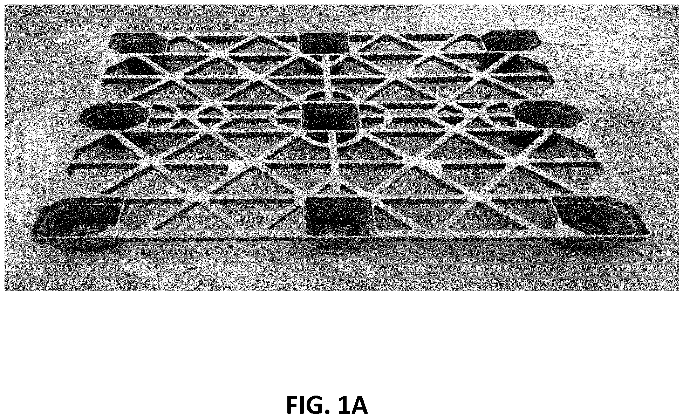

These climate-smart biomass filler powders made from biomass sorghum are one of the premier bio-products produced from the CRBBP Process because, in addition to being much less toxic than Carbon Black Filler Powder, they have the ability to sequester large amounts of $CO_2$/Acre/Time Period. Figure 1A shows a recyclable shipping pallet bio-product made from climate-smart biomass filler powder. The pallet was made by blending climate-smart bio-based filler powder with waste plastic by the USDA's Western Regional Research Center, as a work product of a Cooperative Research and Development Agreement (#58-2030-6-033), involving the Center and the inventor, which ended July 19, 2019. In addition to climate-smart filler powders, other climate-smart products can be produced from biomass sorghum via the CRBBP Process, one of which is climate-smart Biochar. Like the climate-smart filler powders, climate-smart Biochar is produced through the heat treatment-based CRBBP Process. Because climate-smart Biochar is also made from biomass sorghum, it also has the ability to long-term sequester large amounts of $CO_2$/Acre/Time Period.

In addition, these climate-smart bio-products have enhanced phytoremediation and soil stabilization capabilities via their root systems. This results in an increase in soil productivity; fillers or extenders, which are used in industrial applications such as to make stronger, lighter and heat and water-resistant plastics.

The CRBPP Process can also be used to produce standard, non-climate-smart bio-products using base materials such as rice straw, wheat straw, cotton, corn stover, sorghum, yellow pine, almond shells, nut shells, agricultural residue, and forest litter.

In addition, the industry has focused on the utilization of biomass such as forest trimmings, farming residues and agricultural wastes, animal byproducts, food waste, etc. as additives for polymers such as recycled plastics. Biomass reinforced plastic composites have been developed for many applications mainly because the biomass used in making the plastic composites is derived from sustainable, natural resources and therefore can reduce greenhouse gas emissions considerably. Moreover, handling of biomass yields less health and safety hazards and produces much less wear on processing equipment, unlike, for example, glass fiber-filled recycled plastic composites. One disadvantage of the use of biomass as additives for polymeric composites is the hydrophilic nature of the materials. Biomass mainly contains hemicellulose, amorphous and crystalline cellulose, lignin, and, to some extent, volatile organic acids, and oils. The hydrophilic nature of the hemicellulose and amorphous cellulose components makes the biomass incompatible with hydrophobic polymers such as recycled plastics, resulting in poor interfacial adhesion between the natural fibers and the polymer matrix. Another disadvantage is the poor thermal properties of the biomass which can degrade during melt-blending with polymers such as recycled plastics. Without pretreatment, the processing temperatures of polymers such as recycled plastics can lead to degradation of the main components of the biomass, which negatively affects the structural integrity of the resulting polymeric composite material. Finally, to some extent, elimination of volatile materials, commonly known as off-gassing may also occur which can be problematic during production of the polymeric composite materials.

Beyond niche markets such as recycled plastics, biomass filler has broader potential market appeal in durable goods such as automotive parts and household wares. However, it is difficult for unmodified biomass to be used for high performance applications due to its inherent hydrophilic nature and poor thermal resistance. Efforts have been made in the industry to improve these properties. For example, compatibilizers such as polypropylene-*graft*-maleic anhydride are melt-blended with biomass additives to improve interfacial adhesion of the biomass to the hydrophobic recycled plastics. However, this is not cost-effective and the resulting effect on the bulk properties of the recycled polymer are nominal at best. Moreover, it does not address the growing public concern of the polymeric composite's environmental impact.

There exists an industrial need to improve the material properties of biomass to broaden potential market applications as an environmentally friendly, sustainable filler. In particular, there is a need for adding more functionality to biomass additives to improve the mechanical and thermal properties of reclaimed or recycled materials. The improvements described herein will allow biomass additives to be melt-blended into recycled plastics at elevated temperatures to produce not only single-use products but also high performance, durable goods for applications, for example, in the automotive and food industries.

**BRIEF DESCRIPTION OF THE DRAWINGS**

FIG. 1A shows a shipping pallet bio-product made from waste plastic and the inventor's climate-smart biomass filler powder made from biomass sorghum.

FIG. 2A shows comparison of the amount of carbon dioxide captured by biomass sorghum, switchgrass, and pine trees.

FIG. 2B illustrates the effect of fillers on heat distortion temperatures (HDT) of polypropylene (PP).

FIGs. 3A-3C shows tensile test results for PP - TS (heat-treated biomass) compounds.

FIGs. 4A-4C shows tensile test results for LLDPE (linear low-density polyethylene) - TS (heat-treated biomass) compounds.

FIGs. 5A-5C shows the comparison of tensile results between PP-TS and LLDPE-TS compounds.

FIG. 6A shows heat distortion temperature (HDT) for PP-TS compound.

FIG. 6B shows heat distortion temperature (HDT) for LLDPE-TS compound.

FIG. 7A shows differential scanning calorimetery (DSC) curves for PP-TS compounds.

FIG. 7B shows differential scanning calorimetery (DSC) curves for PP-GTS (ground TS) compounds.

FIG. 8A shows differential scanning calorimetery (DSC) curves for LLDPE-TS compounds.

FIG. 8B shows differential scanning calorimetery (DSC) curves for LLDPE-GTS compounds.

FIG. 9A shows thermo gravimetric analyses (TGA) of carbon black.

FIG. 9B shows thermo gravimetric analyses (TGA) of TS.

FIG. 10A shows TGA of PP-TS.

FIG. 10B shows TGA of PP-GTS.

FIG. 11A shows TGA of LLPDE-TS.

FIG. 11B shows TGA of LLPDE-GTS.

FIGs. 12A-12C shows water intake of PP-TS composites under different conditions.

FIGs. 13A-13C shows water intake of PP-GTS composites under different conditions.

FIGs. 14A-14C shows thickness swelling of PP-TS composites under different conditions.

FIGs. 15A-15C shows thickness swelling of PP-GTS composites under different conditions.

FIGs. 16A-16C shows water intake of LLDPE-TS composites under different conditions.

FIGs. 17A-17C shows water intake of LLPDE-GTS composites under different conditions.

FIGs. 18A-18C shows thickness swelling of LLPDE-TS composites under different conditions.

FIGs. 19A-19C shows thickness swelling of LLPDE-GTS composites under different conditions.

## DETAILED DESCRIPTION

The following description is presented to enable any person skilled in the art to make and use the present disclosure and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present disclosure is not limited to the embodiments shown but is to be accorded the widest scope consistent with the claims.

The feature or features of one embodiment may be applied to other embodiments, even though not described or illustrated, unless expressly prohibited by this disclosure or the nature of the embodiments.

Unless defined otherwise, all technical and scientific terms used herein generally have the same meaning as commonly understood by one of ordinary skill in the art to which this disclosure belongs. The definitions below are intended to be used as a guide for one of ordinary skill in the art and are not intended to limit the scope of the present disclosure. Mention of tradenames or commercial products is solely for the purpose of providing specific information or examples and does not imply recommendation or endorsement of such products.

The terms "a" and "an" are defined as one or more unless this disclosure explicitly requires otherwise. The term "substantially" is defined as largely but not necessarily wholly what is specified (and includes what is specified, e.g., substantially 90 degrees includes 90 degrees and substantially parallel includes parallel), as understood by a person of ordinary skill in the art. In any disclosed embodiment, the terms "substantially," "approximately," and "about" may be substituted with "within [a percentage] of" what is specified, where the percentage includes 0.1, 1, 5, and 10 percent.

The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a composition or formulation that "comprises," "has," "includes" or "contains" one or more elements possesses those one or more elements but is not limited to possessing only those elements. Likewise, a method that "comprises," "has," "includes" or "contains" one or more steps possesses those one or more steps but is not limited to possessing only those one or more steps. Any embodiment of any of the compositions, systems, and methods can consist of or consist essentially of - rather than comprise/include/contain/have - any of the described steps, elements, and/or features. Thus, in any of the claims, the term "consisting of" or "consisting essentially of" can be substituted for any of the open-ended linking verbs recited above, in order to change the scope of a given claim from what it would otherwise be using the open-ended linking verb.

"Recycled" or "reclaimed" in this context means the process of recovering waste plastic and reprocessing it into a wide array of end products. Typically, the waste plastic is sorted into different polymers and then melt mixed in an extruder. The extruded strands are then cooled, pelletized, and subsequently processed via injection molding or other known polymer processes to form the desired product. The term "recycled" or "reclaimed" plastic may be a homogenous or heterogeneous mixture of various different types of plastics. The types of plastics that can be "recycled" or "reclaimed" can include but are not limited to polypropylene (PP), low-density polyethylene (about 0.910 to about 0.940 g/cm$^3$) (LDPE), high-density polyethylene (about 0.930 to about 0.970 g/cm$^3$) (HDPE), polystyrene (PS), and/or combinations therein.

"Biomass" in this context means plant or wood-based material generally containing hemicellulose, cellulose, and lignin. It can also mean organic residues obtained from harvesting and processing of agricultural crops. Examples of biomass can include but are not limited to native sources such as rice straw, wheat straw, cotton, corn stover, sorghum, biomass sorghum, yellow pine, almond shells, nut shells, crop residues, wood byproducts, agricultural residue, and forest litter.

"Biomass Sorghum" in this context means an annual sorghum species that can reach heights of between 15 and 20 feet and produce up to 20 tons of plant material per acre, per growing season.

For the purposes of this present application, "climate-smart biomass" in this context means biomass resulting from a plant or tree which captures an average of 7 tons $CO_2$/acre/year, or more, and that can capture at least 3 times as much $CO_2$ as an equal acreage of pine trees, as described in the University of California-Berkeley study.

"Additive" in this context means a fiber or mineral which is melt-blended into a polymer to modify its properties.

"Heat-treated" in this context means pyrolysis of biomass under an inert atmosphere such as nitrogen or argon at temperatures between about 400° and about 500°C for example 400° to 450°C or 450° to 500°C, for a certain residence time for example between 30 to 180 minutes. The temperature and residence time chosen for the process will determine the degree of heat treatment of the fibers. During the heat treatment process, hemicellulose, amorphous cellulose, and volatile organic acids and oils within the fibers are converted to a densified brown to black uniform solid biomass, becoming a more hydrophobic product.

"Heat deflection temperature" or "heat distortion temperature" means a temperature that is determined by heating the polymer material and noting the point in which significant softening has occurred, allowing the sample to be readily pliable. Improved heat resistance and improved thermal stability correspond to higher heat deflection temperatures.

"Improved barrier properties" means having a contact angle value higher than unmodified recycled or reclaimed plastic. Contact angle is one of the common ways to measure the wettability of a surface or material. Wetting refers to how a liquid deposited on a solid substrate spreads out. The wetting is determined by measuring the contact angle which the liquid forms in contact with solids. The wetting tendency is larger the smaller the contact angle or the surface tension is. A wetting liquid is a liquid that forms a contact angle with the solid which is smaller than 90°. A non-wetting liquid creates a contact angle between 90° and 180° with the solid.

"Improved barrier properties" also means having the ability to decrease the oxygen transmission rate (OTR). OTR is an important factor in measuring the effectiveness of a barrier material, particularly film, laminates, or plastic-coated papers.

The present disclosure may be understood more readily by reference to the following detailed description of embodiments and to the Figures and their previous and following description.

Disclosed herein are methods to process climate-smart biomass materials or agricultural 0s for industrial or agricultural use. In some embodiments, the biomass materials are sourced from a Combined Remediation Biomass and Bio-Product Production (CRBBP) Process detailed in U.S. Patent No. 10,086,417 (the '417 patent).

In one embodiment, disclosed herein are heated-treated biomass fillers used as a polymer additive in commodity plastics, such as polypropylene (PP), polyethylene terephthalate (PET), and polyethylene (PE), as well as bioplastics such as polylactic acid (PLA) and polyhydroxyalkanoate (PHA). Biomass from various sources such as sorghum, wood residues, almond shells, walnut shells, biomass sorghum and straws can be heat-treated and ground to produce heat-treated biomass fillers to be mixed with polymers to produce polymeric composites. The polymeric composite is shown to have comparable and sometimes superior commercially relevant physical properties such as process ability, heat distortion temperature, rigidity of the polymeric composite, and colorant properties when compared to polymeric composite produced with traditional fillers such as carbon black. In some embodiments, the heat-treated biomass filler is primarily used as a colorant.

Improved heat deflection for example is sought by the polymer industry for plastic products that do not soften as easily in hot conditions, such as under intense sunlight on hot days. When the heat-treated biomass filler is compared with fillers that are often applied commercially for this purpose, namely talc, calcium carbonate, and biomass fibers, it produces a plastic product that does not soften as easily under elevated temperatures without adversely affecting basic processing parameters. Thus, the heat-treated biomass filler disclosed herein introduces improved end-use properties without adding significant processing or material costs.

In one embodiment, biomass sorghum is heated at 400°C for 30 minutes and then cooled and ground into a powder having a particle size of 100um. The heat-treated biomass sorghum, which is black in color, can be used to displace carbon black in polymeric composites and provides additional advantageous mechanical properties beyond adding color. For example, when 2-20% heat-treated biomass sorghum is added to polypropylene, it improved its heat deflection temperature and increased its rigidity. When the heat-treated biomass sorghum filler is compared with fillers that are often applied commercially for this purpose, namely talc, calcium carbonate, and biomass fibers, it produces a plastic product that does not soften as easily under elevated temperatures without adversely affecting basic processing parameters.

Improved heat deflection is sought by the polymer industry for plastic products that do not soften as easily in hot conditions, such as under intense sunlight on hot days. Thus, the heat-treated biomass sorghum filler disclosed herein introduces improved end-use properties without adding significant processing or material costs. In one embodiment, instead of biomass sorghum, yellow pine is used and achieved results that are similar to that of biomass sorghum.

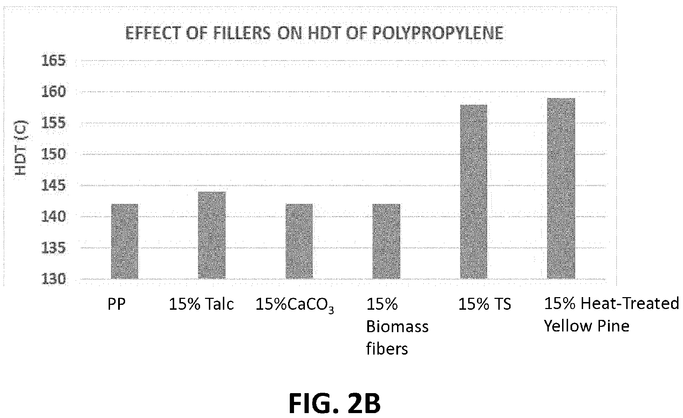

FIG. 2B outlines the heat deflection temperature for heat-treated biomass (TS) compared with fillers that are often applied commercially for this purpose, namely talc, calcium carbonate, and biomass fibers. These data confirm that TS filler creates a plastic product that does not soften as easily under elevated temperatures and without adversely affecting basic plastic composition processing parameters. Improved heat deflection is sought by the polymer industry for plastic products that do not soften as easily in hot conditions, such as under intense sunlight on hot days. Thus, the method and composition disclosed herein has the potential to introduce improved end-use properties without adding significant processing or material costs.

The heat-treated biomass filler can be used to improve the property of common industry polymers such as polypropylene (PP). PP is a commodity plastic commonly used in a wide array of applications, such as automotive interior parts, clothing, low density packaging, and structural foam because of its toughness and good chemical resistance. However, such widespread use of PP has created a problem relating to the disposal of the thermoplastic. Single use products made of PP end up in landfills as waste. Because PP degrades slowly in landfills, waste management has become a significant issue. Fortunately, polypropylene, in addition to other plastics such as PET, polystyrene (PS), and PE, can be recycled, and most communities engage in some form of active recycling programs.

There are several available methods for recycling plastics. One method involves homogenous recycling, as disclosed in U.S. Patent Nos. 3,567,815 and 3,976,730. In U.S. Patent No. 3,567,815, approximately 5-30% high density polystyrene was melt-blended to post-consumer low density polystyrene to improve its processability. Addition of small quantities of high-density polystyrene produced unusually large increases in extrusion rate and relatively uniform thickness gauge on the sheet extrudate. In U.S. Patent No. 3,976,730, a method was presented in which melt scrap polyethylene was melt-blended into virgin resin at concentrations of 20 to 40%. Another method as described in U.S. Patent No. 5,145,617 involved mixing different plastics. The common theme described in these patents - a process known in the art as reclamation - is that the plastic waste materials are being recycled in the form of blends via various polymer processes such as extrusion. The method allows for the conversion of the plastic waste materials into a variety of new materials. However, reclamation often produces materials with reduced mechanical and thermal properties. This is loosely termed "down cycling" the plastic rather than "recycling" and it affects the end-use value of the reclaimed product.

To improve or broaden the range of properties of the reclaimed materials, certain additives are melt-blended via extrusion into recycled plastics. In some embodiments, the present disclose provides a polymeric composite containing recycled or reclaimed plastics blended with biomass fillers. The recycled or reclaimed plastics in this disclosure can be polypropylene (PP), low-density polyethylene (LDPE), high-density polyethylene (HDPE), polystyrene (PS), and/or combinations of the aforementioned plastics. The biomass additives in this disclosure are heat-treated biomass from agricultural feedstocks, such as sorghum, yellow pine, almond, walnut, pistachio shells, almond hulls, rice hulls, and biomass sorghum, or combination thereof. The polymeric composite is prepared by melt-blending the recycled or reclaimed plastics along with heat-treated biomass via extrusion. The resultant polymeric composite has a higher heat deflection temperature and better mechanical and barrier properties than the unfilled polymer.

In some embodiments, the "recycled" or "reclaimed" polymer has a number average molecular weight between about 10,000 and about 1,000,000 Daltons (e.g., 10,000-1,000,000 Daltons), for example in the range of about 30,000 to about 100,000 Daltons (e.g., 30,000 to 100,000 Daltons). In some embodiments, the "recycled" or "reclaimed" polymer has a melt flow index (MFI) between about 2 and about 10 g/10 min at 230°C (e.g., 2-10 g/10 min at 230°C), for example in the range of about 4 and about 8 g/10 min at 230°C (e.g., 4-8 g/10 min at 230°C). In some embodiments, the biomass has been heat-treated to yield a heat-treated biomass which degrades between about 300° and about 400°C (e.g., 300°-400°C), for example from about 300° to about 375°C (e.g., 300°-375°C). In some embodiments, the heat-treated biomass filler has a particle size between about 1 to about 1000 microns (e.g., 1-1000 microns), for example from about 50 to about 200 microns (e.g., 50-200 microns).

In some embodiments, the biomass materials are heat treated through pyrolysis of biomass in temperature from about 400° to about 500°C under non-oxygenated conditions such as inert nitrogen, carbon dioxide, or argon environment, for about 30 min to about 180 min. The temperature and residence time chosen for the process determines the degree of heat treatment of the fibers. Biomass may come from but is not limited to fibers from native sources such as rice straw, wheat straw, cotton, corn stover, sorghum, biomass sorghum, nut shells, yellow pine, almond, other agricultural residue, and forest litter. In some embodiments, the heat-treated biomass has been heat-treated between about 400° to about 500°C (e.g., 400°-500°C) under non-oxygenated conditions, for example between about 400° to about 450°C (e.g., 400°-450°C). In some embodiments, the heat-treated biomass has been heat-treated between about 30 to about 180 minutes (e.g., 30-180 minutes) under non-oxygenated conditions, for example between about 30 to about 60 minutes (e.g., 30-60 minutes).

At least about 15% of the carbon of the biomass material is consumed during the heat treatment process, leaving at least about 85% of the carbon of the biomass material in the heated treated biomass. In some embodiments, at least about 20% of the carbon of the biomass material is consumed during the heat treatment process, leaving at least about 80% of the carbon of the biomass material in the heated treated biomass. In some embodiments, at least about 25% of the carbon of the biomass material is consumed during the heat treatment process, leaving at least about 75% of the carbon of the biomass material in the heated treated biomass.

In some embodiments, the heat-treated biomass is from about 5 to about 40 percent (e.g., 5-40 percent) of the total weight of the polymeric composite, for example from about 15 to about 30 percent (e.g., 15-30 percent). In some embodiments, the "recycled" or "reclaimed" plastic polymer is about 50 to about 90 percent (e.g., 50-90%) of the total weight of the polymeric composite, for example, in the range of about 60 to about 80 percent (e.g., 60-80%).

In some embodiments, various articles of manufacture may be formed with polymeric composites of the present disclosure. For example, processes such as extruding, injection molding, sheet forming, blow molding, and thermoforming may be used to create articles including cutlery, containers for packaging, hot server items, hard plastic casings, 3-D printed items, 3-D printer ink, and other items. It should be appreciated that a person of ordinary skill in the art may select any suitable known process to create any article of manufacture from the polymeric composite of this disclosure.

While the present disclosure may be embodied in many different forms, there are described in detail herein specific embodiments of the present disclosure to serve as examples to understand. The present disclosure is an exemplification of the principles of the present disclosure and is not intended to limit the present disclosure to the particular embodiments illustrated. All patents, patent applications, scientific papers, and any other referenced materials mentioned herein are incorporated by reference in their entirety. Furthermore, the present disclosure encompasses any possible combination of some, or all, of the various embodiments and characteristics described herein and/or incorporated herein.

In addition, the present disclosure encompasses any possible combination that also specifically excludes any one or some of the various embodiments and characteristics described herein and/or incorporated herein.

The amounts, percentages and ranges disclosed herein are not meant to be limiting, and increments between the recited amounts, percentages and ranges are specifically envisioned as part of the present disclosure. All ranges and parameters disclosed herein are understood to encompass any, and all, sub-ranges subsumed therein, and every number between the endpoints. For example, a stated range of "1 to 10" should be considered to include any and all sub-ranges between (and inclusive of) the minimum value of 1 and the maximum value of 10 including all integer values and decimal values; that is, all subranges beginning with a minimum value of 1 or more, (e.g., 1 to 6.1), and ending with a maximum value of 10 or less, (e.g. 2.3 to 9.4, 3 to 8, 4 to 7), and finally to each number 1, 2, 3, 4, 5, 6, 7, 8, 9, and 10 contained within the range.

Unless otherwise indicated, all numbers expressing quantities of ingredients, properties such as molecular weight, reaction conditions (e.g., reaction time, temperature), percentages and so forth as used in the specification and claims are to be understood as being modified in all instances by the term "about." Accordingly, unless otherwise indicated, the numerical properties set forth in the following specification and claims are approximations that may vary depending on the desired properties sought to be obtained in embodiments of the present disclosure. As used herein, the term "about" refers to a quantity, level, value, or amount that varies by as much as 10% to a reference quantity, level, value, or amount.

Unless defined otherwise, all technical and scientific terms used herein have the same meaning as commonly understood by one of ordinary skill in the art to which the present disclosure belongs. Although any methods and materials similar or equivalent to those described herein can be used in the practice or testing of the present disclosure, the example methods and materials are now described.

The following examples are intended only to further illustrate the present disclosure and are not intended to limit the scope of the present disclosure as defined by the claims.

## Examples

Biomass sorghum is heated treated following the procedure disclosed herein to produce as produced heat-treated biomass sorghum (TS). The composites of polypropylene (PP), as well as linear low-density polyethylene (LLDPE) thermoplastics filled with up to 50 wt.% TS are evaluated to assess its efficacy in improving mechanical, thermal and water uptake properties. PP and LLDPE were mixed with as-produced and ball-milled heat-treated biomass sorghum (GTS), by adding in different percentages. Mixing was done using a mini compounder at 190°C-200°C and 165°C using PP and LLDPE, respectively at 20 rpm mixing rate for 20 minutes. After compounding, three or more dog-bone shape samples were formed from the same batch, and for each condition, via DSM Research Micro-Injection molding machine at temperatures 190°C and 160°C for PP and LLDPE, respectively. The mechanical properties of the blends obtained in this manner were investigated by tensile testing and the fracture surfaces of the samples were observed after the tensile test by using scanning electron microscopy (SEM). Thermal behaviors of blends were characterized by using Differential Scanning Calorimetry (DSC) analyses. Thermal stability of composites was determined by using thermo gravimetric analysis (TGA) under elevated temperature. Heat Distortion Temperatures (HDT) were obtained using Dynamic Mechanical Analyses (DMA). Environmental stability of the composites was assessed using liquid absorption and swelling experiments over a 7-day period by immersion in pure water with pH 7, 0.01 M Dilute HCl solution with pH 2 and 0.01 M dilute NaOH solution with pH 12.

The elastic modulus of PP increased with an increasing TS amount for both as produced and ground PP/TS specimens. No significant difference has been observed between as produced and ground heat-treated biomass sorghum filler specimens. On the other hand, maximum stress and strain at maximum stress decreased with increasing amount of heat-treated biomass sorghum filler.

The elastic modulus and maximum stress values for LLDPE increased with increasing amount of heat-treated biomass sorghum filler for both as produced and ground LLDPE/TS specimens. Strain at maximum stress decreased with increasing amount of heat-treated biomass sorghum filler. When the trends of the elastic moduli for PP/TS and LLDPE/TS composites were compared, the effect of TS amount was found to be similar on both composites, resulting in increasing behavior for the elastic moduli in similar proportions. In the case of strain values at maximum stress, TS addition affected LLDPE more than PP with higher amounts of strain reduction. The maximum stress values presented opposite behaviors with those for LLDPE increasing while those for PP decreasing. At 50 %wt. TS amount added, the maximum stress and the corresponding strain values for both LLDPE/TS and PP/TS composites became very close.

There is no appreciable change in melting temperatures for the PP/TS and LLDPE/TS composites with TS filler addition up to 50 wt.%.

Heat Distortion Temperature (HDT) of PP/TS and humidified PP/TS composites increased with an increasing amount of TS. When compared with neat PP, up to 31.72°C and 30.92°C increases were obtained for heat distortion temperatures of PP/TS and humidified PP/TS composites, respectively, with TS filler addition of up to 50 wt.%. The efficacy of larger TS particles is better in increasing the heat distortion temperature for the composite in comparison to the use of smaller ground TS particles. HDT of LLDPE/TS increased with an increasing amount of TS resulting in 25.57°C enhancement. The carbon conversion of TS was determined to be approximately 78.42% by using Thermogravimetric Analysis (TGA).

Thermal stability of PP/TS, PP/GTS, LLDPE/TS, and LLDPE/GTS composites were found to be higher than the neat PP and LLDPE materials, and their stability increased with increasing amount of TS/HGTS fillers, as determined using TGA by the residual weight method. The residual weights of the TS-filled composites were slightly less than those for their HGTS-filled counterparts.

Among the TS-filled polymers tested, for the PP/TS composite, the maximum water uptake was ~6% and the maximum thickness swelling was ~4.5%. For the LLDPE/TS composite, the maximum water uptake was ~8% and the maximum thickness swelling was ~3.5%.

*Example 1: Preparation of Heat-treated Biomass Sorghum (TS)*

Prior to heat treatment, the biomass sorghum was ground using an industrial Wiley mill. Thermogravimetric analysis under nitrogen was performed before the heat treatment procedure to optimize the heat treatment temperatures. Two criteria were established: (1) increased hydrophobicity of the biomass and (2) relatively high yields after heat treatment. The increased hydrophobicity would result in improved fiber adhesion to the polymer matrix, providing improvements in mechanical and thermomechanical properties of the bio-composites. Secondly, yields greater than 50 by weight % of the starting biomass were sought in order for the process to be economically viable. The ground biomass sorghum was treated at different temperatures, such as 300°, 350°, 400°, 450°, and 500°C. The yield at 400°C was roughly 60 by weight % of the starting material.

Increasing the heat treatment temperature of the unmodified biomass sorghum decreased the overall percent yield of the heat-treated biomass. A dramatic increase in mass loss was observed between 230° and 260°C. At 300°C, ~ 40% of the original mass remained. This is in line with the mechanism of heat treatment. Breakdown of the cellulose and hemicellulose occurs, producing gases and volatile organics.

The biomass sorghum was heat-treated using a high temperature convection furnace. The size of the chamber limited the amount of biomass that could be heat-treated at one time to approximately 1 kg. To prevent combustion of the biomass during the heating process, an inert atmosphere was maintained using nitrogen gas at a flow rate of approximately 150 mL/min. The biomass was heated to 400°C and held at temperature for 0.5 h. The biomass was then allowed to cool to room temperature in the inert atmosphere. Thermogravimetric analysis (TGA) of the unheat-treated and heat-treated biomasses was conducted using a Perkin Elmer Pyris 1 TGA. A temperature ramp of 10°C per minute from room temperature to 500°C was used to analyze the biomass. The heat-treated biomass sorghum was ground further and then sieved to produce ball-milled heat-treated biomass sorghum (GTS) that has a particle size in the range of about 100 to about 200 microns.

*Example 2 Preparation of Polymeric Composite Materials*

The polymeric composites of PP/TS and LLDPE/TS were prepared by adding a different percentage of heat-treated biomass sorghum (labelled as TS) filler with commercial PP (Himount, MFI is 73 g/10 min and Mw is 144,000) and LLDPE (courtesy of Americhem) thermoplastic polymers by using PL 2000 CW Brabender mini compounding machine (C.W. Brabender Instruments Inc., South Hackensack, NJ), which can prepare up to 35 g material. Before compounding, TS powders were ground with ball mill and alumina balls for 24 hours. Particle size distributions of ground TS were analyzed by a Malvern Mastersizer m+Ver.2.15 model laser diffraction particle size analyzer. The average particle size of ground particles was found to be 465 nm. TS powders were used as produced and 24 h ground (labelled as GTS) by considering particle size results.

Polymer and TS were mixed at temperatures 190°C-200°C and 165°C using PP and LLDPE, respectively using 20 rpm mixing rate for 20 minutes. After compounding, five dog-bone shape samples and six rectangular samples were formed from the same batch via DSM Research Micro-Injection molding machine at temperatures 190°C and 160°C for PP and LLDPE, respectively.

*Example 3 Tensile Test*

Instron (Noorwood, MA) 5567 model universal electromechanical test machine was utilized to measure the following mechanical properties: elastic modulus, maximum tensile stress at break point and strain at maximum stress point of polymer/TS compounds, as well as neat PP and neat LLDPE. Thecrosshead speed was 50 mm/min and a 1 kN load cell was used. Five dog-bone shape specimens were tested based on ASTMType V standard for each composition. Load and extension values were obtained as an output and converted to tensile stress, tensile strain and Young's modulus values by using the input dimensionsof samples via Bluehill2 software.

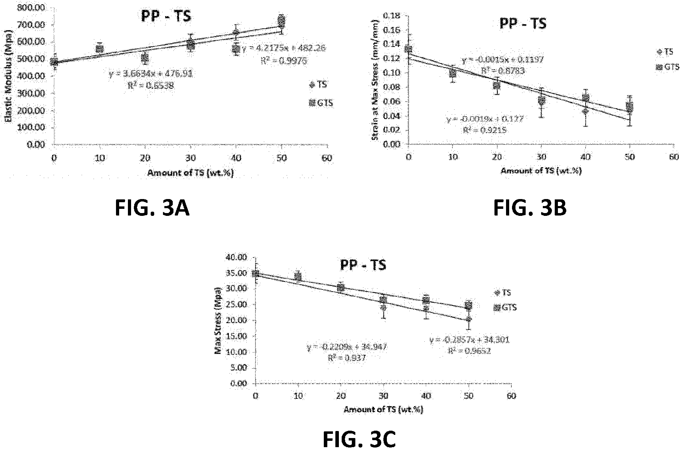

Elastic modulus of PP increased with an increasing TS amount for both as produced and ground PP/TS specimens. No significant difference has been observed between as produced and ground TS-filler specimens. On the other hand, maximum stress and strain at maximum stress decreased with increasing amount of TS filler. Decrease in elongation can be attributed to local deformation process which prevents the necking of composites with an increasing filler amount, and the decrease in maximum stress can be attributed to increasing brittleness of the TS/PP composite. The PP/TS composite showed slightly lower values than PP/GTS composite at higher filler loadings due to increasing interfacial strength when using nanometer size (ground) fillers. The tensile test results for PP/TS are shown in FIGs. 3A-3C.

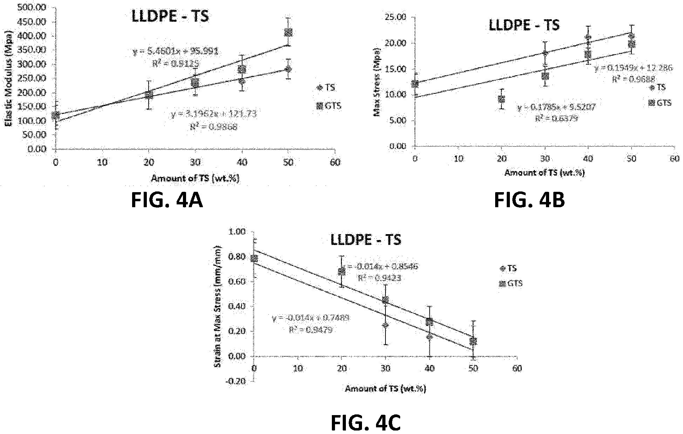

Elastic modulus and maximum stress values for LLDPE increased with increasing amount of TS filler for both as produced and ground LLDPE/TS specimens. Strain at maximum stress decreased with increasing amount of TS filler. Decrease in elongation can be attributed to local deformation process which prevents the necking of composites with increasing amount of filler. On the other hand, high deformation capacity of LLDPE (in comparison to PP) prevents onset of brittleness with TS addition, which allows increases in maximum stress values for the LLDPE/TS composite with increasing amounts of TS filler addition. The tensile test results for LLDPE/TS are shown in FIG. 4A-4C.

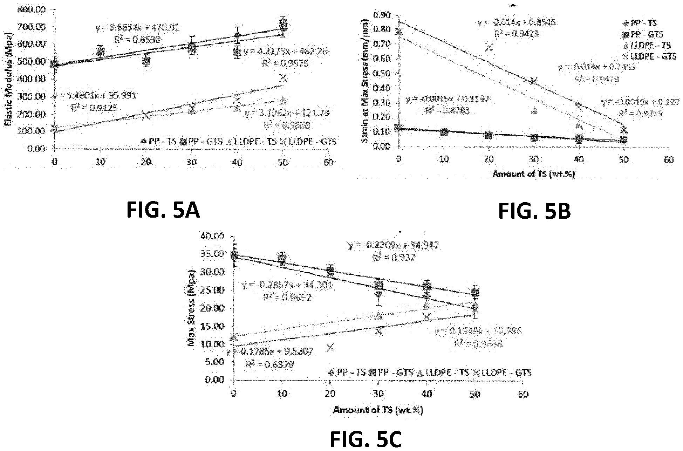

When the trends of the elastic moduli for PP/TS and LLDPE/TS composites were compared, the effect of TS amount was found to be similar on both composites, resulting in increasing behavior for the elastic moduli in similar proportions. In the case of strain values at maximum stress, TS addition affected LLDPE more than PP with higher amounts of strain reduction. The maximum stress values presented opposite behaviors with those for LLDPE increasing while those for PP decreasing. At the highest TS amount added (50 %wt.) the maximum stress and the corresponding strain values for both LLDPE/TS and PP/TS composites became very close. Comparison of Tensile Results between PP-TS and LLDPE-TS Compounds are shown in FIG. 5A-5C.

*Example 4 Dynamic Mechanical Analyses (DMA)*

DMA analyses were performed to obtain heat distortion temperatures for polymer/TS compounds, as well as neat PP and neat LLDPE polymers. DMA - TA instrument Q800 (TA Instruments, New Castle, DE) was used under a nitrogen environment with three-point bending apparatus under constant stress (0.455 MPa) based on ASTM International Standard D648 using 50 mm length, 12 mm width and 1.92 depth/thickness ratio for the specimens. For each composition, three humidified and three non-humidified specimens were tested to assess any humidity effect. For that purpose, the specimens were humidified 48 h with 52% relative humidity using saturated $Mg(NO_3)_2$ solution at room temperature. Specimens were tested in the 35°C to 150°C (PP/TS) and 35°C to 120°C (LLDPE/TS) ranges using 10°C/min ramp rate. The temperature at 0.2 mm/mm strain was recorded as the heat distortion temperature. Neat polymers were tested as well to see the effect of TS to the heat distortion temperature.

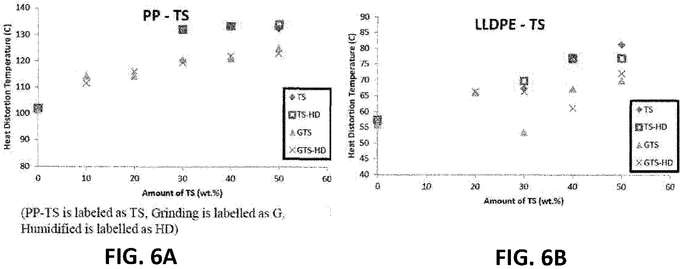

Heat Distortion Temperature (HDT) of PP/TS and humidified PP/TS composites increased with an increasing amount of TS. When compared with neat PP, up to 31.72°C and 30.92°C increases were obtained for heat distortion temperatures of PP/TS and humidified PP/TS composites, respectively, with TS filler addition of up to 50 wt.%. Humidifying the samples did not result in considerable changes in heat distortion temperatures. In the case of PP/ground-TS and humidified PP/ground-TS specimens; HDT increment stood at 23.53°C and 20.97°C, respectively for the highest amount of TS addition, which indicates that the efficacy of larger (as produced) TS particles is better in increasing the heat distortion temperature for the composite in comparison to the use of smaller (ground) TS particles. The results are shown in FIG. 6A.

HDT of LLDPE/TS increased with an increasing amount of TS resulting in 25.57°C enhancement. Humidification did not result in considerable changes until 50% TS filler addition, which provided 19.59°C increase. LLDPE/GTS and humidified LLDPE/GTS composites had lower gains in HDT with increases of 14.15°C and 14.73°C increments, at most, respectively. The results are shown in FIG. 6B.

Differences obtained in HDT between as produced and ground filler added composites (PP/TS - PP/GTS composites, as well as LLDPE/TS - LLDPE/GTS composites, respectively) can be attributed to reductions in freedom of movement of polymer chains which is reduced more when porous and bigger particles were added (confinement effect) in comparison to the addition of smaller (ground) particles.

*Example 5 Differential Scanning Calorimetry (DSC)*

DSC analyses were performed to obtain melting temperatures and illustrate the effect of TS addition on the thermal behavior of TS/polymer composites. A DSC-TA instrument Q200 (TA Instruments, New Castle, DE) was used under s nitrogen environment with each ~ 7g sample, and the samples were scanned from 25°C to 190°C at 10°C/min ramp rate.

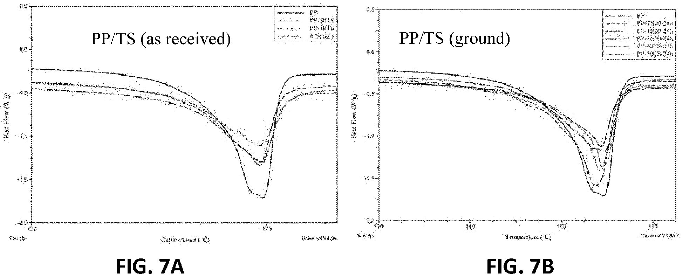

As shown in FIG. 7A, 7B, and Table 1, there is no appreciable change in melting temperature for the PP/TS composites with TS filler addition up to 50 wt.%. The enthalpic endotherm, ΔH, however is reduced by as much as 50.65% in comparison to the neat polymer (PP) when 50 wt.% TS is added in ground form. This result points to reduction in the degree of crystallinity for the PP matrix with TS and GTS filler addition.

### Table 1

| | TS wt.% | T-melting | ΔH | ΔH RANK (%) |
|---|---|---|---|---|
| PP | 0 | 169.18 | 108.4 | 100.00 |
| | 30 | 168.74 | 82.78 | 76.37 |
| | 40 | 168.54 | 81.24 | 74.94 |
| | 50 | 168.08 | 72.6 | 66.97 |
| GTS wt.% | | | | |
| | 10 | 167.4 | 103.2 | 95.2 |
| | 20 | 169.2 | 84.84 | 78.27 |
| | 30 | 168.29 | 86.48 | 79.78 |
| | 40 | 168.86 | 67.15 | 61.95 |
| | 50 | 168.48 | 54.9 | 50.65 |

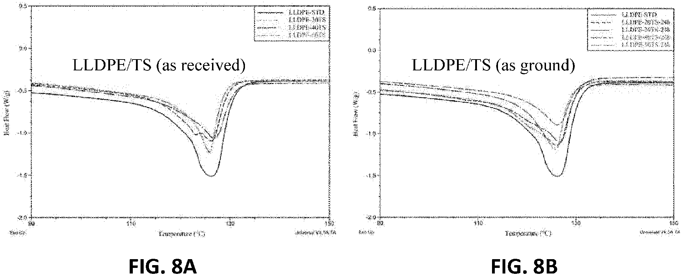

As shown in FIG. 8A, 8B, and Table 2, there is no appreciable change in melting temperature for the LLDPE/TS composites with TS filler addition up to 50 wt.%. The enthalpic endotherm, ΔH, however is reduced by as much as 49.81 % in comparison to the neat polymer (PP) when 50 wt.% TS is added in ground form. This result points to reduction in the degree of crystallinity for the LLDPE matrix with TS and GTS filler addition.

### Table 2

| | TS wt.% | T-melting | ΔH | ΔH RANK (%) |
|---|---|---|---|---|
| LLDPE | 0 | 126.3 | 87.89 | 100.00 |
| | 30 | 126.24 | 61.83 | 70.35 |
| | 40 | 126.83 | 57.87 | 65.84 |
| | 50 | 125.88 | 54.98 | 62.56 |
| GTS wt.% | | | | |
| | 20 | 126.13 | 69.06 | 78.58 |
| | 30 | 126.62 | 66.22 | 75.34 |
| | 40 | 125.77 | 61.7 | 70.20 |
| | 50 | 126.14 | 43.78 | 49.81 |

*Example 6 Thermo Gravimetric Analyses (TGA)*

Thermal stability of composites was determined by using TGA under elevated temperature. A TGA-TA instrument Q50 (TA Instruments, New Castle, DE) was employed for this purpose. All specimens were heated at temperature between 550°C and 650°C under a nitrogen environment with 10°C/min ramp rate.

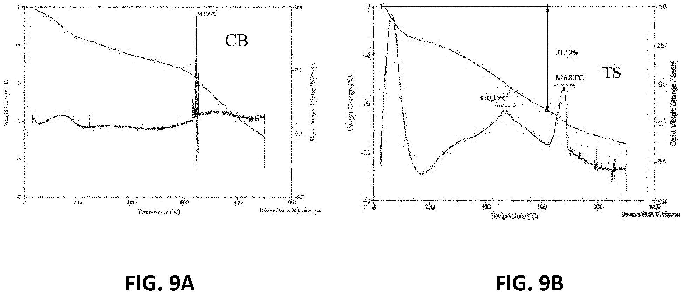

TGA curves of carbon black (CB) and TS were compared to approximately identify the carbon formation percentage after the heat treatment process of biomass sorghum, and the results are shown in FIGs. 9A and 9B. The TGA curve for CB reveals that the main CB oxidation reaction begins around 645.30°C. The TGA curve for TS, on the other hand, reveals that, prior to the heat treatment process, the first organic parts: moisture, relatively small, carbonized particles and some organics disintegrate and exhibit a broad peak. The carbonizing parts begin to react at 676.80°C (close to the CB reaction temperature) due to heat treatment. Until the initiation of this TS reaction only 21.52 wt.% of TS has been burned, which indicates that the carbon conversion of biomass sorghum is approximately 78.42%.

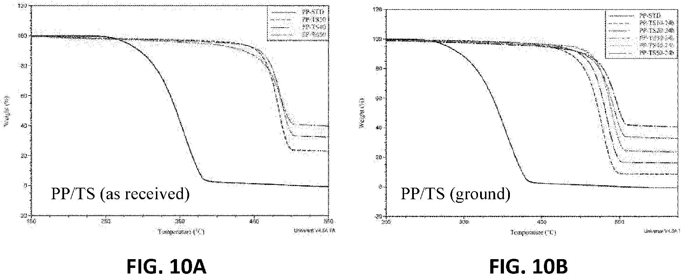

Thermal stability of PP/TS and PP/GTS composites are higher than the neat PP material, and the stability increases with increasing amount of TS filler. The residual weight of PP/TS is slightly less than that for PP/GTS. The results are shown in FIGs. 10A and 10B.

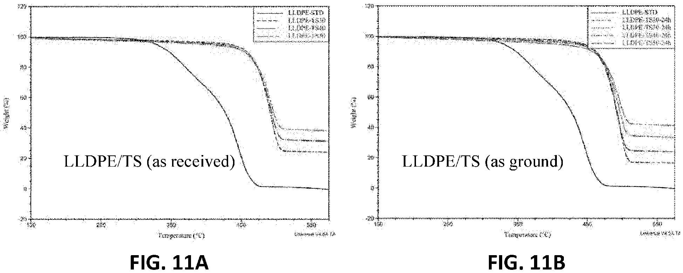

Thermal stability of LLDPE/TS and LLDPE/GTS composites are higher than the neat LLDPE material, and the stability increases with increasing amount of TS filler. The residual weight of LLDPE/TS is around 3% less than that for LLDPE/GTS. The results are shown in FIGs. 11A and 11B.

*Example 7 Water Intake and Thickness Swelling Calculations for PP/TS and LLDPE/TS Composites*

PP/TS and LLDPE/TS composites were immersed into pure water with pH 7, 0.01 M Dilute HCl solution with pH 2 and 0.01 M dilute NaOH solution with pH 12 for 7 days at room temperature. At the end of 1st, 3rd and 7th days, samples were moved out from water, HCl and NaOH solutions, liquid on surface wiped with tissue and then weight and thickness changes recorded to calculate liquid absorption and physical stability of samples, respectively by the following formulas where W and t indicate weight and thickness of samples, respectively:

$$Water\ Absorption = \frac{W_{after\ immersion} - W_{before\ immersion}}{W_{before\ immersion}} \times 100$$

$$Thickness\ Swelling = \frac{t_{after\ immersion} - t_{before\ immersion}}{t_{before\ immersion}} \times 100$$

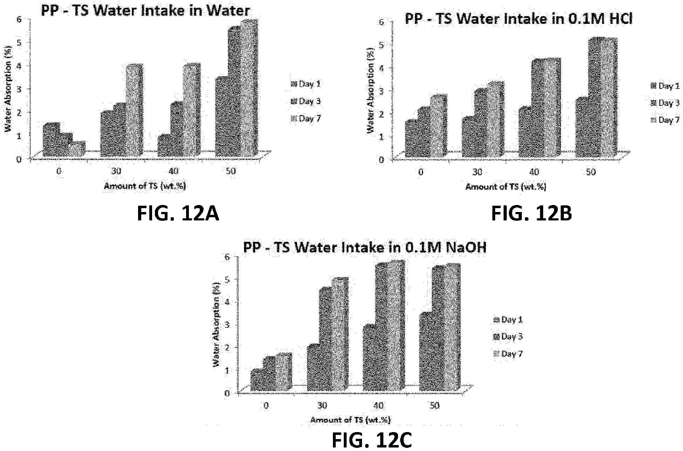

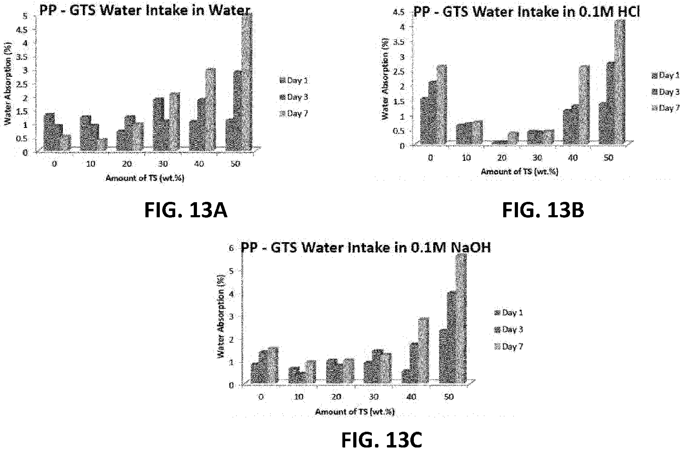

Water intake of PP/TS (as produced) composites under different conditions are shown in FIGs. 12A-12C. Liquid intake of composites increased with increasing amount of TS filler from day 1 to day 7. Composites absorb more liquid in 0.1 M NaOH solution. Water intake of PP-ground TS composites under different conditions are shown in FIGs. 13A-13C. Neat PP shows higher absorption in HCl solution in comparison to GTS filler addition of up to 40 wt.%. In general liquid intake of PP/GTS composites increased from day 1 to day 7 except the neat PP and PP/10 % GTS composites in water. Up to 30 wt.% GTS amount, liquid absorption of composites decreased or did not change considerably, and this can be explained by prevention of water intake in composites via ground GTS particles. After 30 wt.% GTS, liquid intake rate increased, while such intake was minimum from the HCl solution.

When the PP/TS (as produced) composites and PP/GTS (ground) composites are compared, it can be seen that, in general, PP/GTS absorbed less liquid than PP/TS. This can be explained by the nature of as-produced TS which has a porous structure. In the case of as-produced particles, composites absorb the liquid in and through these pores. When the TS is ground, those pores are eliminated leading to lower liquid intake.

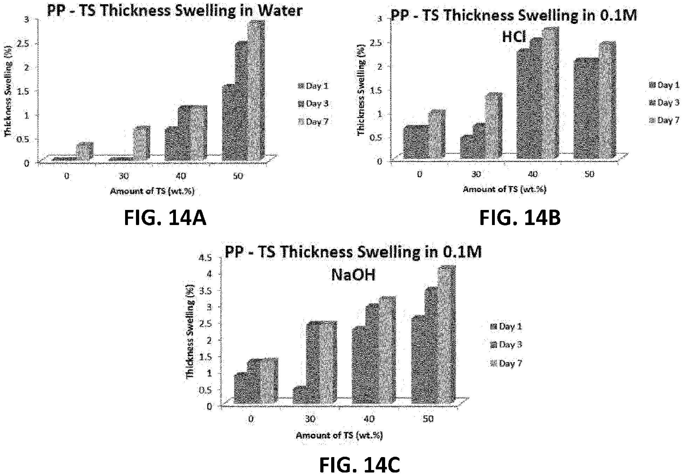

Thickness swelling of PP/TS (as produced) composites under different conditions are shown in FIGs. 14A-14C. Thickness swelling in composites increased from day 1 to day 7 with increasing amount of TS fillers. Such swelling is less in water and HCl solution than in NaOH solution.

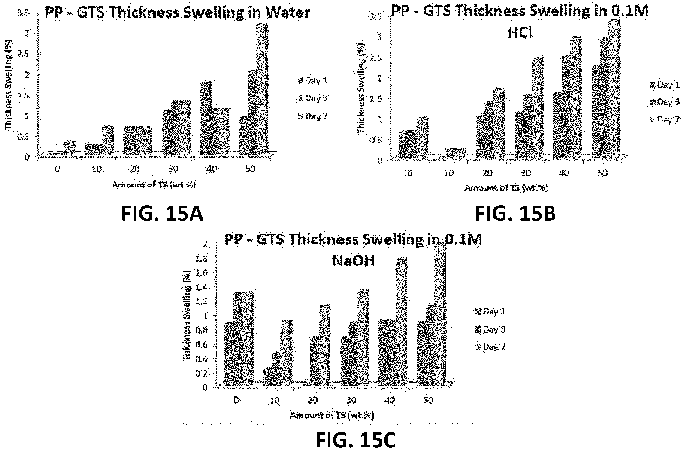

Thickness swelling of PP-ground TS Composites under different conditions are shown in FIGs. 15A-15C. Thickness swelling of composites increased with increasing amount of GTS fillers in general except for PP/10 wt.% GTS in HCl and NaOH solutions. Such swelling is less in water and NaOH solution than in HCl solution.

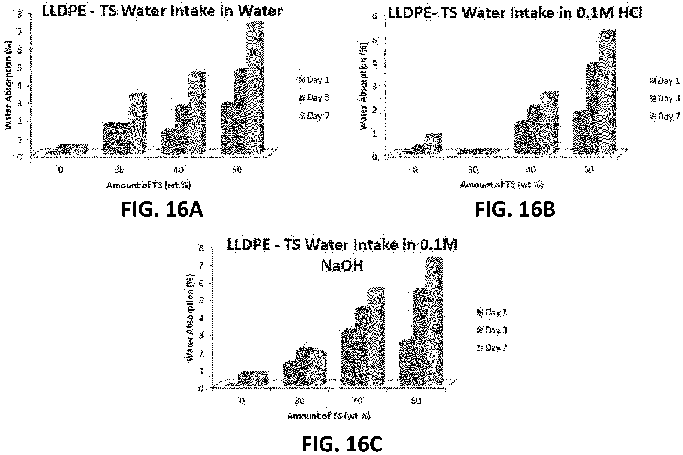

Water intake of LLDPE-TS (as produced) composites under different conditions are shown in FIGs. 16A-16C. Liquid intake of composites increased from day 1 to day 7 with increasing amount of TS fillers. Composites absorbed less water in 0.1 M HCl solution.

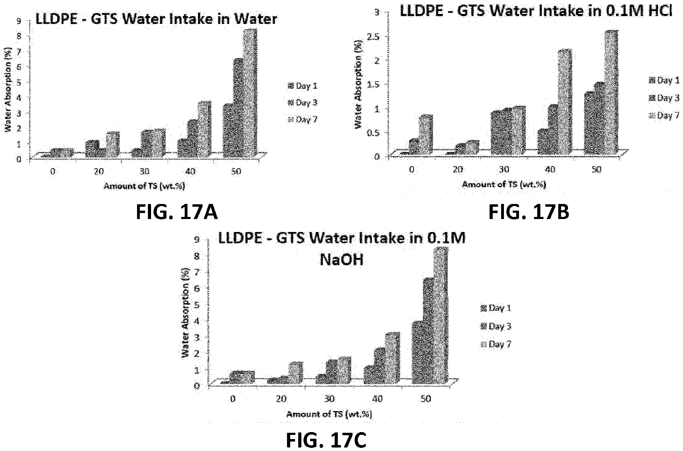

Water intake of LLDPE-ground TS composites under different conditions are shown in FIGs. 17A-17C. Liquid intake of composites slightly increased from day 1 to day 7 with an increasing amount of GTS up to 30wt.% LLDPE/GTS and increased more significantly beyond that GTS filler amount. Composites absorbed less liquid when in 0.1 M HCl solution.

When the LLDPE/TS (as produced) composites and LLDPE/GTS (ground) composites are compared, it can be seen that, in general, LLDPE/GTS absorbed less water than LLDPE/TS, except with the 50 wt.% TS composites. This can be explained by the nature of as-produced TS which has a porous structure. In the case of as-produced particles, composites absorb the liquid in and through these pores. When the TS is ground, those pores are eliminated leading to lower liquid intake.

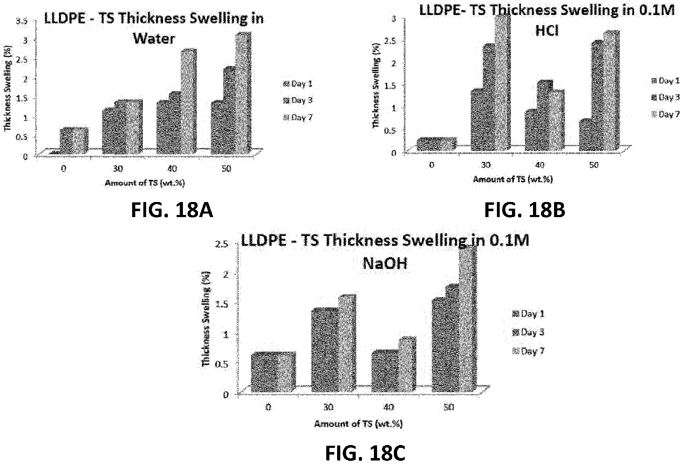

Thickness swelling of LLDPE-TS (as produced) compounds under different conditions are shown in FIGs. 18A-18C. Thickness swelling of composites increased with increasing amount of TS except for 40 wt.% TS composites which showed less thickness swelling in HCl and NaOH solutions. Such swelling is less in NaOH solution.

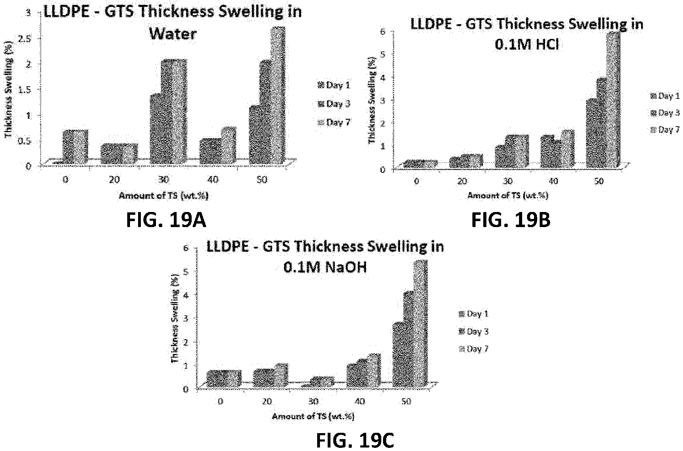

Thickness swelling of LLDPE-ground TS compounds under different conditions are shown in FIGs. 19A-19C. Thickness swelling of composites increased slightly or did not change considerably with increasing amount of ground GTS until 50 wt.% GTS addition, except that 30 wt.% TS added composites showed more thickness swelling in water. Such swelling was less in NaOH and HCl solutions until 50 wt.% GTS addition, while the LLDPE/50 wt.% GTS composite had less swelling in water.

*Example 8. Scanning Electron Microscopy (SEM)*

The fracture surfaces of samples were observed after the tensile test by using scanning electron microscopy (SEM, Hitachi S-2150 (Kumagaya, Japan). Thin layer of conducting silver was coated on to samples by using an Emitech (Kent, UK) Model-K575x Turbo Sputter Coater before the SEM analyses. Examination was performed at different magnifications to show the roughness and morphology of fracture surfaces to explain the effect of heat-treated biomass sorghum amount on polymer/TS composite structures, focusing on TS particles to observe the compatibility of TS and polymer.

Elastic modulus of PP increased with an increasing TS amount for both as produced and ground PP/TS specimens. No significant difference has been observed between as produced and ground TS-filler specimens. On the other hand, maximum stress and strain at maximum stress decreased with increasing amount of TS filler. Decrease in elongation can be attributed to local deformation process which prevents the necking of composites with an increasing filler amount, and the decrease in maximum stress can be attributed to increasing brittleness of the TS/PP composite. The PP/TS composite showed slightly lower values than PP/GTS composite at higher filler loadings due to increasing interfacial strength when using nanometer size (ground) fillers.

Elastic modulus and maximum stress values for LLDPE increased with increasing amount of TS filler for both as produced and ground LLDPE/TS specimens. Strain at maximum stress decreased with increasing amount of TS filler. Decrease in elongation can be attributed to local deformation process which prevents the necking of composites with increasing amount of filler. On the other hand, high deformation capacity of LLDPE (in comparison to PP) prevents onset of brittleness with TS addition, which allows increases in maximum stress values for the LLDPE/TS composite with increasing amounts of TS filler addition.

When the trends of the elastic moduli for PP/TS and LLDPE/TS composites were compared, the effect of TS amount was found to be similar on both composites, resulting in increasing behavior for the elastic moduli in similar proportions. In the case of strain values at maximum stress, TS addition affected LLDPE more than PP with higher amounts of strain reduction. The maximum stress values presented opposite behaviors with those for LLDPE increasing while those for PP decreasing. At the highest TS amount added (50 %wt.) the maximum stress and the corresponding strain values for both LLDPE/TS and PP/TS composites became very close.

Heat Distortion Temperature (HDT) of PP/TS and humidified PP/TS composites increased with an increasing amount of TS. When compared with neat PP, up to 31.72°C and 30.92°C increases were obtained for heat distortion temperatures of PP/TS and humidified PP/TS composites, respectively, with TS filler addition of up to 50 wt.%. Humidifying the samples did not result in considerable changes in heat distortion temperatures. In the case of PP/ground-TS and humidified PP/ground-TS specimens; HDT increment stood at 23.53°C and 20.97°C, respectively for the highest amount of TS addition, which indicates that the efficacy of larger (as produced) TS particles is better in increasing the heat distortion temperature for the composite in comparison to the use of smaller (ground) TS particles. HDT of LLDPE/TS increased with an increasing amount of TS resulting in 25.57°C enhancement. Humidification did not result in considerable changes until 50% TS filler addition, which provided 19.59°C increase. LLDPE/GTS and humidified LLDPE/GTS composites had lower gains in HDT with increases of 14.15°C and 14.73°C increments, at most, respectively.

Differences obtained in HDT between as produced and ground filler added composites (PP/TS - PP/GTS composites, as well as LLDPE/TS - LLDPE/GTS composites, respectively) can be attributed to reductions in freedom of movement of polymer chains which is reduced more when porous and bigger particles were added (confinement effect) in comparison to the addition of smaller (ground) particles.

There is no appreciable change in melting temperature for the PP/TS composites with TS filler addition up to 50 wt.%. The enthalpic endotherm, ΔH, however is reduced by as much as 50.65% in comparison to the neat polymer (PP) when 50 wt.% TS is added in ground form. This result points to reduction in the degree of crystallinity for the PP matrix with TS and GTS filler addition.

There is no appreciable change in melting temperature for the LLDPE/TS composites with TS filler addition up to 50 wt.%. The enthalpic endotherm, ΔH, however is reduced by as much as 49.81% in comparison to the neat polymer (PP) when 50 wt.% TS is added in ground form. This result points to reduction in the degree of crystallinity for the LLDPE matrix with TS and GTS filler addition. TGA curves of carbon black (CB) and TS were compared to approximately identify the carbon formation percentage after the heat treatment process of biomass sorghum. The TGA curve for CB reveals that the main CB oxidation reaction begins around 645.30°C. The TGA curve for TS, on the other hand, reveals that, prior to the heat treatment process, the first organic parts: moisture, relatively small, carbonized particles and some organics disintegrate and exhibit a broad peak. The carbonizing parts begin to react at 676.80°C (close to the CB reaction temperature) due to heat treatment. Until the initiation of this TS reaction only 21.52 wt.% of TS has been burned, which indicates that the carbon conversion of biomass sorghum is approximately 78.42%.

Thermal stability of PP/TS and PP/GTS composites are higher than the neat PP material, and the stability increases with increasing amount of TS filler. The residual weight of PP/TS is slightly less than that for PP/GTS.

Thermal stability of LLDPE/TS and LLDPE/GTS composites are higher than the neat LLDPE material, and the stability increases with increasing amount of TS filler. The residual weight of LLDPE/TS is around 3% less than that for LLDPE/GTS.

Liquid intake of PP-TS (as produced) composites increased with increasing amount of TS filler from day 1 to day 7. Composites absorb more liquid in 0.1 M NaOH solution.

For the PP-Ground TS samples, Neat PP shows higher absorption in HCl solution in comparison to GTS filler addition of up to 40 wt.%. In general liquid intake of PP/GTS composites increased from day 1 to day 7 except the neat PP and PP/10%TS composites in water. Up to 30 wt.% GTS amount, liquid absorption of composites decreased or did not change considerably, and this can be explained by prevention of water intake in composites via ground TS particles. After 30 wt.% GTS, liquid intake rate increased, while such intake was minimum from the HCl solution.

Thickness swelling in PP-TS (as produced) composites increased from day 1 to day 7 with increasing amount of TS fillers. Such swelling is less in water and HCl solution than in NaOH solution.

Thickness swelling of PP-Ground TS composites increased with increasing amount of GTS fillers in general except for PP/10 wt.% GTS in HCl and NaOH solutions. Such swelling is less in water and NaOH solution than in HCl solution.

Liquid intake of LLDPE-TS (as produced) composites increased from day 1 to day 7 with increasing amount of TS fillers. Composites absorbed less water in 0.1 M HCl solution.

Liquid intake of LLDPE-Ground TS composites slightly increased from day 1 to day 7 with an increasing amount of GTS up to 30 wt.% LLDPE/GTS and increased more significantly beyond that TS filler amount. Composites absorbed less liquid when in 0.1 M HCl solution.

Thickness swelling of LLDPE-TS (as produced) composites increased with increasing amount of TS except for 40 wt.% TS composites which showed less thickness swelling in HCl and NaOH solutions. Such swelling is less in NaOH solution.

Thickness swelling of LLDPE-Ground TS composites increased slightly or did not change considerably with increasing amount of ground GTS until 50 wt.% GTS addition, except that 30 wt.% TS added composites showed more thickness swelling in water. Such swelling was less in NaOH and HCl solutions until 50 wt.% GTS addition, while the LLDPE/50 wt.% GTS composite had less swelling in water.

Scanning Electron Microscopy (SEM) was performed at different magnifications to show the roughness and morphology of fracture surfaces to explain the effect of TS amount on polymer/TS composite structures, focusing on TSparticles to observe the compatibility of TS and polymer.

The embodiments above are intended to be illustrative and not limiting. Additional embodiments are within the claims. In addition, although the present disclosure has been described with reference to particular embodiments, those skilled in the art will recognize that changes can be made in form and detail without departing from the spirit and scope of the disclosure. Any incorporation by reference of documents above is limited such that no subject matter is incorporated that is contrary to the explicit disclosure herein.

The methods and compositions described herein provide a polymeric composite material containing a heat-treated biomass and recycled or reclaimed plastic. The current polymeric composite material may be modified in multiple ways and applied in various technological applications. Although the materials of construction are generally described, they may include a variety of compositions consistent with the function described herein. Such variations are not to be regarded as a departure from the spirit and scope of this disclosure, and all such modifications as would be obvious to one skilled in the art are intended to be included within the scope of the following claims.

Throughout this application, various publications are referenced. The disclosures of these publications in their entireties are hereby incorporated by reference into this application in order to more fully describe the state of the art to which this pertains. The references disclosed are also individually and specifically incorporated by reference herein for the material contained in them that is discussed in the sentence in which the reference is relied upon.

In some embodiment, the polymeric composite disclosed herein comprises (or consists essentially of or consists of) (a) recycled or reclaimed plastic and (b) heat-treated biomass, wherein said recycled or reclaimed plastic and said heat-treated biomass are compounded to create a polymeric composite. Said recycled or reclaimed plastics are selected from the group consisting of polypropylene, low-density polyethylene, high-density polyethylene, polystyrene, and mixtures thereof. Said recycled or reclaimed plastic has a number average molecular weight between about 10,000 and about 1,000,000 Daltons, for example between about 30,000 to about 100,000 Daltons.

The recycled or reclaimed plastic has a melt flow index between about 2 and about 10 g/10 min at 230°C, for example between about 4 and about 8 g/10 min at 230°C. Said recycled or reclaimed plastic comprises from about 50 to about 90 percent of the total weight of said polymeric composite, for example from about 60 to about 80 percent of the total weight of said polymeric composite. Said polymeric composite is comprised of (a) recycled plastics and (b) heat-treated biomass or (a) reclaimed plastics and (b) heat-treated biomass.

In one embodiment, said heat-treated biomass is heat-treated agricultural feedstocks selected from the group consisting of almond shells, walnut shells, pistachio shells, almond hulls, rice hulls, rice straw, wheat straw, cotton, corn stover, sorghum, yellow pine, almond, forest litter, biomass sorghum, and mixtures thereof. Said heat-treated biomass has been heat-treated between about 400° to about 500°C under non-oxygenated conditions, for example between about 400° to about 450°C under non-oxygenated conditions.

In another embodiment, said heat-treated biomass has been heat-treated at about 4000° under non-oxygenated conditions. Said heat-treated biomass has been heat-treated between about 30 to about 180 minutes under non-oxygenated conditions, for example between about 30 to about 120 minutes under non-oxygenated conditions or between about 30 to about 60 minutes under non-oxygenated conditions. Said heat-treated biomass degrades between about 300° and about 400°C, for example, between about 300° to about 375°C. Said heat-treated biomass has a particle size between about 1 to about 1000 microns, for example, between about 50 to about 200 microns. Said heat-treated biomass comprises from about 5 to about 40 percent of the total weight of said polymeric composite, for example from about 10 to about 30 percent of the total weight of said polymeric composite.

The polymeric composite is prepared by a process comprising melt-blending said recycled or reclaimed plastic with said heat-treated biomass via extrusion. The polymeric composite has a higher heat deflection temperature than a polymeric composite comprising recycled or reclaimed plastic but no heat-treated biomass. The polymeric composite has a higher yield strength than a polymeric composite comprising recycled or reclaimed plastic but no heat-treated biomass. The polymeric composite has a higher flexural modulus than a polymeric composite comprising recycled or reclaimed plastic but no heat-treated biomass. The polymeric composite does not contain a compatibilizer. The polymeric composite does not contain any of the following: glass fibers, calcium carbonate, and elastomers (e.g., natural rubber), talc powder, carbon black, talc, titanium dioxide, petroleum-based industrial compatibilizers.

The term "consisting essentially of" excludes additional method (or process) steps or composition components that substantially interfere with the intended activity of the method (or process) or composition and can be readily determined by those skilled in the art (for example, from a consideration of this specification or practice of the present disclosure disclosed herein).

Other embodiments of the present disclosure will be apparent to those skilled in the art from a consideration of this specification or practice of the present disclosure disclosed herein. It is intended that the specification and examples be considered as exemplary only, with the true scope and spirit of the present disclosure being indicated by the following claims.

**Claims**

1. A climate-smart process that combines a use of photosynthesis with remediating air, soil and water and a production of bio-products in which captured carbon is sequestered.

2. The climate-smart process of claim 1, wherein the process includes one or more bio-crops that are converted into a climate-smart biomass.

3. The climate-smart process of claim 2, wherein the climate-smart biomass captures an average of 7 tons, or more, of $CO_2$/acre/year.

4. The climate-smart process of claim 3, wherein (i) the climate-smart biomass is heat treated between about 400° to about 500°C for between about 30 to about 180 minutes under non-oxygenated conditions and (ii) 15% of carbon in the climate-smart biomass is consumed, leaving at least about 85% of the carbon in the climate-smart biomass.

5. The climate-smart process of claim 4, wherein the climate-smart biomass is treated between about 30 to about 120 minutes under non-oxygenated conditions.

6. The climate-smart process of claim 4, wherein the climate-smart biomass is heat treated between about 450° to about 500°C under non-oxygenated conditions.

7. The climate-smart process of claim 1, wherein a heat treatment step is excluded.

8. The climate-smart process of claim 2, wherein the climate-smart biomass comprises an agricultural feedstock comprising biomass sorghum, wherein preferably the agricultural feedstock further comprises wood, nut shells, soybean hulls, and a combination thereof.

9. The climate-smart process of claim 4, wherein the climate-smart biomass is heat treated at about 450°C under non-oxygenated conditions.

10. The climate-smart process of claim 4, wherein the climate-smart biomass is heat treated between about 30 to about 60 minutes under non-oxygenated conditions.

11. The climate-smart process of claim 8, wherein the agricultural feedstock is grinded to produce a climate-smart filler powder, preferably wherein the agricultural feedstock is grinded to produce a climate-smart Biochar product.

12. The climate-smart process of claim 2, further comprising grinding the climate-smart biomass to a particle size between about 1 to about 1000 microns, preferably grinding the climate-smart biomass to a particle size between about 50 to about 200 microns.

13. The climate-smart process of claim 1, further comprising:

    compounding a mixture that comprises a plastic and a climate-smart biomass, the climate-smart biomass having been heat treated between about 400° to about 500°C for between about 30 to about 180 minutes under non-oxygenated conditions, the mixture forming a polymeric composite;
    wherein the heat-treated climate-smart biomass comprises from about 5 to about 40 percent of the total weight of the polymeric composite;
    wherein at least about 15% of the carbon of the agricultural feedstock is consumed during a heat treatment process, leaving at least about 85% of the carbon ion the heated treated climate-smart biomass; and
    wherein the plastic has an average molecular weight between about 10,000 and about 1,000,000 Daltons.

14. The climate-smart process of claim 13, wherein the climate-smart biomass comprises an agricultural feedstock comprising biomass sorghum, preferably wherein the agricultural feedstock further comprises wood, nut shells, soybean hulls, and a combination thereof.

15. The climate-smart process of claim 13, wherein the plastic is selected from the group consisting of polypropylene, low-density polyethylene, high-density polyethylene, polystyrene, and mixtures thereof, preferably wherein the compounding comprises melt-blending the plastic with the climate-smart biomass via extrusion to form the polymeric composite.

FIG. 1A

**FIG. 2A**

EFFECT OF FILLERS ON HDT OF POLYPROPYLENE

## FIG. 2B

**FIG. 3A**

**FIG. 3B**

**FIG. 3C**

FIG. 4A

FIG. 4B

FIG. 4C

EP 4 707 262 A1

FIG. 5A

FIG. 5B

FIG. 5C

FIG. 6A

(PP-TS is labeled as TS, Grinding is labelled as G,
Humidified is labelled as HD)

FIG. 6B

**FIG. 7A**

**FIG. 7B**

EP 4 707 262 A1

FIG. 8A

FIG. 8B

FIG. 9A

FIG. 9B

**FIG. 10A**

**FIG. 10B**

**FIG. 11A**

**FIG. 11B**

EP 4 707 262 A1

FIG. 12A

FIG. 12B

FIG. 12C

FIG. 13A

FIG. 13B

FIG. 13C

FIG. 14A

FIG. 14B

FIG. 14C

FIG. 15A

FIG. 15B

FIG. 15C

**FIG. 16A**

**FIG. 16B**

**FIG. 16C**

FIG. 17A

FIG. 17B

FIG. 17C

FIG. 18A

FIG. 18B

FIG. 18C

**FIG. 19A**

**FIG. 19B**

**FIG. 19C**

**EUROPEAN SEARCH REPORT**

Application Number

EP 25 20 0490

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/159731 A1 (JAMES JOSEPH J [US]) 25 May 2023 (2023-05-25) * paragraphs [0047], [0067] - [0077], [0128]; claims 1-18; figure 1A * | 1-15 | INV. C05F11/02 |
| X | CHANG BOON PENG ET AL: "A comprehensive review of renewable and sustainable biosourced carbon through pyrolysis in biocomposites uses: Current development and future opportunity", RENEWABLE AND SUSTAINABLE ENERGY REVIEWS, ELSEVIERS SCIENCE, NEW YORK, NY, US, vol. 152, 13 September 2021 (2021-09-13), XP086852395, ISSN: 1364-0321, DOI: 10.1016/J.RSER.2021.111666 [retrieved on 2021-09-13] * table 2 * | 1-7,13, 15 | |
| X | CN 108 559 543 A (UNIV TIANJIN) 21 September 2018 (2018-09-21) * example 3 * | 1-3,7,8, 12 | TECHNICAL FIELDS SEARCHED (IPC) C05F C10B C10G |

The present search report has been drawn up for all claims

| Place of search | Date of completion of the search | Examiner |
|---|---|---|
| The Hague | 27 November 2025 | Kampatsikas, Ioannis |

EPO FORM 1503 03.82 (P04C01)

## ANNEX TO THE EUROPEAN SEARCH REPORT
## ON EUROPEAN PATENT APPLICATION NO.

EP 25 20 0490

27-11-2025

| Patent document cited in search report | Publication date | Patent family member(s) | | Publication date |
|---|---|---|---|---|
| US 2023159731 A1 | 25-05-2023 | US | 2023159731 A1 | 25-05-2023 |
| | | US | 2024425686 A1 | 26-12-2024 |
| CN 108559543 A | 21-09-2018 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10086417 B
- US 3567815 A
- US 3976730 A
- US 5145617 A